(19) Europäisches Patentamt
European Patent Office
Office européen des brevets

(11) **EP 4 658 496 B1**

(12) **EUROPÄISCHE PATENTSCHRIFT**

(45) Veröffentlichungstag und Bekanntmachung des Hinweises auf die Patenterteilung:
**17.06.2026   Patentblatt 2026/25**

(21) Anmeldenummer: **24703725.2**

(22) Anmeldetag: **02.02.2024**

(51) Internationale Patentklassifikation (IPC):
*B32B 5/02* (2006.01)      *B32B 1/08* (2006.01)
*B32B 5/08* (2006.01)      *B32B 7/022* (2019.01)
*B32B 7/03* (2019.01)      *B32B 7/12* (2006.01)
*B32B 25/10* (2006.01)     *B32B 25/18* (2006.01)

(52) Gemeinsame Patentklassifikation (CPC):
**B32B 1/08; B32B 5/024; B32B 5/08; B32B 7/022; B32B 7/03; B32B 7/06; B32B 7/12; B32B 25/10; B32B 25/18; F16L 58/1063; F16L 58/16;**
B32B 2250/02; B32B 2250/03; B32B 2250/04; B32B 2250/05;                    (Forts.)

(86) Internationale Anmeldenummer:
**PCT/EP2024/052600**

(87) Internationale Veröffentlichungsnummer:
**WO 2024/161006 (08.08.2024 Gazette 2024/32)**

(54) **KORROSIONSSCHUTZBAND UMFASSEND MINDESTENS EIN GEWEBE**

ANTI-CORROSION TAPE COMPRISING AT LEAST ONE WOVEN FABRIC

BANDE ANTICORROSION COMPRENANT AU MOINS UN TISSU

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **02.02.2023   DE 102023102631**

(43) Veröffentlichungstag der Anmeldung:
**10.12.2025   Patentblatt 2025/50**

(73) Patentinhaber: DENSO-Holding GmbH & Co.
**51371 Leverkusen (DE)**

(72) Erfinder: **KAISER, Thomas Markus**
**52459 Inden (DE)**

(74) Vertreter: **Geskes, Christoph**
**Geskes Patent- und Rechtsanwälte**
**Gustav-Heinemann-Ufer 74b**
**50968 Köln (DE)**

(56) Entgegenhaltungen:
| | |
|---|---|
| WO-A1-2014/157522 | DE-A1- 2 032 007 |
| DE-B3- 102018 107 257 | RO-B1- 118 806 |
| US-A1- 2011 079 311 | US-A1- 2022 214 005 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
B32B 2260/021; B32B 2260/048; B32B 2262/0253;
B32B 2262/0261; B32B 2262/0269;
B32B 2262/0276; B32B 2262/06; B32B 2262/148;
B32B 2270/00; B32B 2307/51; B32B 2307/54;
B32B 2307/546; B32B 2307/5825; B32B 2307/714;
B32B 2307/7376; B32B 2307/748; B32B 2307/752;
B32B 2405/00; B32B 2597/00

**Beschreibung**

Die vorliegende Erfindung betrifft ein Korrosionsschutzband, insbesondere zur Herstellung einer Umhüllung auf Rohren, Verfahren zu seiner Herstellung, seine Verwendung und ein Verfahren zur Erzielung eines Korrosionsschutzes auf Rohren und Rohre umfassenden Anlagen.

Korrosionsschutzzusammensetzungen und Korrosionsschutzsysteme beispielsweise für Rohranlagen wie Pipelines, aber auch für sonstige technische Anlagen, sind vielfältig aus dem Stand der Technik bekannt.

Aus dem Stand der Technik bekannt sind zweilagige Bänder, um rohrförmige Gegenstände vor Korrosion zu schützen. Derartige Korrosionsschutzbänder werden um das Rohr gewickelt derart, dass ein Überlappungsbereich erzeugt wird, um eine durchgehende, dichte Abdeckung des rohrförmigen Gegenstandes zu erzielen. Vor allem im Bereich der Überlappung besteht das Problem, dass sich eine Undichtigkeit aufgrund nicht hinreichenden Kontaktes der Oberseite des Bandes der vorhergehenden Wicklung mit der Unterseite des Bandes der nachfolgenden Wicklung bilden kann und der Eintritt von Wasser ermöglicht wird. Das Wasser kann eine Korrosion entlang des Überlappungsbereiches hervorrufen, die als Spiralkorrosion bekannt ist. Dies wird begünstigt durch bei der Wicklung gebildete Leerräume angrenzend an eine Bandkante einer vorhergehenden Wicklung, die sich durch das Band der nachfolgenden Wicklung, die die Bandkante der vorhergehenden Wicklung abdeckt, bilden. Ebenso gibt es vergleichbare Korrosionsprobleme mit der Bildung von Leerräumen bei Überwicklung von Schweißraupen mit Korrosionsschutzbändern, mittels derer Rohre zusammengefügt werden oder die bei Reparaturen von Rohren angebracht werden. Wenn Bänder appliziert werden, können sich zudem Falten bilden, so dass keine hinreichende Dichtwirkung erzielt wird. Falten in der Wicklung eines Korrosionsschutzbandes bieten Angriffspunkte für während des Handlings und dem Betrieb der Rohrleitung einwirkende Kräfte, zum Beispiel des Erdreichs, und können Ursache für Ablösungen und Undichtigkeiten sein. Auch in diesem Fall ist die Wirksamkeit von korrosionshemmenden Bändern eingeschränkt.

Es besteht ein Bedarf, einerseits die Undichtigkeiten und Leerräume im Überlappungsbereich zu minimieren, insbesondere, um Spiralkorrosion zu vermeiden, und anderseits Falten zu verringern.

US 2022/214005 A1 offenbart eine Korrosionsschutzumhüllung für ein Metallrohr. Die Umhüllung hat eine Innenhülle mit Glasfasern, die ein viskoelastisches thermoplastisches Korrosionsschutzmaterial trägt. RO 118 806 B1 offenbart ein selbstklebendes Band für den Korrosions- und elektrischen Schutz erdverlegter Metallrohre, bestehend aus einer nicht korrodierenden Schutzfolie, auf die ein permanenter Klebstoff aufgebracht ist. Die Schutzfolie kann mit einem Träger für den mechanischen Schutz und den Sonnenschutz verdoppelt werden. DE 20 32 007 A1 offenbart ein Antikorrosionsschutzband, bestehend aus einem biegsamen Träger, der auf beiden Flächen mit einer Substanz versehen ist, die eine Mischung aus einem oxidierten Bitumen und einem fließfähigen bituminösen Öl sowie vorzugsweise zusätzlich einem Pulveranteil und einem Fungizid ist. US 2011/079311 A1 offenbart eine Schutzdichtung umfassend eine erste Umhüllung, die aus einem korrosionsbeständigen Material besteht und um einen Dichtungsbereich gewickelt ist, der die Außenfläche einer Rohrleitungsbaugruppe berührt. Eine zweite Umhüllung, die aus einem selbsthaftenden Glasfaserverbundstoff besteht, wickelt sich um die erste Umhüllung. DE 10 2018 1 07257 B3 offenbart eine Vorrichtung für eine verbesserte Umhüllung umfassend ein Grundgerüst, eine Antriebseinheit, einen Linearantrieb und eine Wickeleinheit zur Abwicklung mindestens eines flächigen Produktes zur Herstellung der Umhüllung. WO 2014/157522 A1 offenbart ein Verfahren, wobei eine Korrosionsschutzfolie hergestellt wird, indem eine Basismaterialfolie eine Ölpaste, die Öl und Wachs enthält, trägt.

Es ist daher Aufgabe der vorliegenden Erfindung, ein verbessertes Korrosionsschutzband zur Verfügung zu stellen, mit welchem die Bildung von Falten und die Ausbildung von Hohlräumen im Überlappungsbereich, vermindert oder gar vermieden werden kann.

Diese Aufgabe wird gelöst durch ein Korrosionsschutzband, insbesondere zur Herstellung einer Umhüllung auf Rohren, umfassend mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise eingebettet ist, wobei das mindestens eine bidirektionale Gewebe ein Verhältnis einer Biegesteifigkeit nach der Balkenmethode gemäß DIN 53121:2014-08 in Querrichtung zur Längsrichtung in einem Bereich zwischen 1:1,1 und etwa 1:8 aufweist. Wird im Rahmen der Erfindung der Begriff "etwa" im Zusammenhang mit Werten oder Wertebereichen verwendet, so ist darunter ein Toleranzbereich von ±20 %, bevorzugt von ±10 % und weiter bevorzugt von ±5 % vorgesehen. Soweit verschiedene Bereiche für Angaben und/oder für Definitionen in der vorliegenden Erfindung angegeben sind, sind die Untergrenzen und die Obergrenzen der verschiedenen Bereiche in Bezug auf die jeweilige Angabe und/oder auf die jeweilige Definition miteinander kombinierbar. Erfindungsgemäß umfasst das Korrosionsschutzband mindestens eine Verbindungslage. Erfindungsgemäß ist die mindestens eine Verbindungslage hergestellt aus einem Material umfassend mindestens einen Butylkautschuk und/oder mindestens ein Polyisobutylen. Bevorzugt umfasst die Verbindungslage ein Material ausgewählt aus einer Gruppe umfassend mindestens einen ersten, bevorzugt depolymerisierten, Butylkautschuk mit einer scheinbaren Viskosität nach Brookfield bei 66°C gemäß DIN EN ISO 2555 : 2000-01 in einem Bereich von etwa 400.000 mPa · s bis etwa 2.000.000 mPa · s und einem mittleren Molekulargewicht $M_W$ (auch mittlere Molmasse oder molekulare Masse genannt) in einem Bereich von etwa 20.000 bis etwa 60.000 und/oder mindestens ein erstes Polyisobutylen mit einer mittleren relativen Molmasse $M_v$ in einem Bereich von etwa 14.000 g/mol, bevorzugt von etwa 30.000 g/mol, bis etwa 150.000 g/mol, bevorzugt bis etwa 100.000 g/mol, und einem Staudinger-Index $J_0$ in einem Bereich von etwa 15 $cm^3/g$ bis etwa 70 $cm^3/g$, und mindestens einen zweiten Butylkautschuk und/oder mindestens ein zweites Polyisobutylen. Der mindestens eine zweite, bevorzugt zumindest teilweise vernetzte Butylkautschuk weist bevorzugt eine Mooney-Viskosität ML(1+3) bei 127°C in einem Bereich von etwa 65 MU bis etwa 100 MU gemäß ISO 289 : 2005 auf. Das mindestens eine zweite Polyisobutylen weist bevorzugt einen Staudinger-Index $J_0$ in einem Bereich von etwa 75 $cm^3/g$ bis etwa 235 $cm^3/g$ und eine mittlere relative Molmasse $M_v$ in einem Bereich von etwa 150.000 g/mol, bevorzugt von etwa 160.000 g/mol, bis etwa 950.000 g/mol, bevorzugt bis etwa 850.000 g/mol, auf. Weiter bevorzugt umfasst das Material der mindestens einen Verbindungslage einen dritten Butylkautschuk und/oder ein drittes Polyisobutylen. Der mindestens eine dritte, bevorzugt feste, Butylkautschuk weist bevorzugt ein mittleres Molekulargewicht $M_w$ in einem Bereich von etwa 150.000 bis etwa 2.000.000 und eine Mooney-Viskosität ML(1+8) bei 125°C in einem Bereich von etwa 20 MU bis etwa 62 MU, gemessen gemäß ISO 289 : 2005, auf. Das mindestens eine dritte Polyisobutylen weist bevorzugt eine mittlere relative Molmasse $M_v$ in einem Bereich von etwa 900.000 g/mol, bevorzugt von etwa 950.000 g/mol, bis etwa 7.500.000 g/mol, bevorzugt bis etwa 6.500.000 g/mol, und einen Staudinger-Index $J_0$ in einem Bereich von etwa 240 $cm^3/g$ bis etwa 900 $cm^3/g$ auf. Bevorzugt umfasst die mindestens eine Verbindungslage ein Material ausgewählt aus einer Gruppe umfassend mindestens ein erstes Polyisobutylen und/oder einen ersten Butylkautschuk und mindestens ein zweites Polyisobutylen und/oder einen zweiten Butylkautschuk. Weiter bevorzugt umfasst die Verbindungslage ein Material ausgewählt aus einer Gruppe umfassend mindestens ein erstes Polyisobutylen und/oder einen ersten Butylkautschuk, mindestens ein zweites Polyisobutylen und/oder einen zweiten Butylkautschuk, und mindestens ein drittes Polyisobutylen und/oder einen dritten Butylkautschuk. Besonders bevorzugt umfasst die mindestens eine Verbindungslage mindestens ein erstes oder mindestens ein zweites Polyisobutylen als auch mindestens einen ersten oder mindestens einen zweiten Butylkautschuk. Noch weiter bevorzugt umfasst die Verbindungslage einen ersten, einen zweiten und gegebenenfalls einen dritten Butylkautschuk, und kein Polyisobutylen. Noch weiter bevorzugt umfasst die Verbindungslage ein erstes, ein zweites und gegebenenfalls ein drittes Polyisobutylen, und keinen Butylkautschuk. Alternativ umfasst die Verbindungslage nur einen zweiten Butylkautschuk oder nur ein zweites Polyisobutylen. In einer weiteren alternativen, gleichwohl besonders bevorzugten Ausgestaltung umfasst die Verbindungslage nur einen dritten Butylkautschuk oder nur ein drittes Polyisobutylen. In einer weiteren alternativen Ausgestaltung umfasst die mindestens eine Verbindungslage ein Material ausgewählt aus einer Gruppe umfassend mindestens ein zweites Polyisobutylen und/oder einen zweiten Butylkautschuk und mindestens ein drittes Polyisobutylen und/oder einen dritten Butylkautschuk, bevorzugt ein zweites Polyisobutylen und einen dritten Butylkautschuk oder ein drittes Polyisobutylen und einen zweiten Butylkautschuk. Es kann aber auch ein zweites und ein drittes Polyisobutylen von der Verbindungslage umfasst sein oder ein zweiter und ein dritter Butylkautschuk.

Der Staudinger-Index $J_0$ wurde früher auch als Intrinsische Viskosität bezeichnet. Er wird berechnet aus der Flusszeit bei 20°C durch eine Kapillare eines Ubbelohde-Viskosimeters nach der folgenden Formel (Schulz-Blaschke-Gleichung):

$$J_0 = \eta_{sp}/c \, (1+0{,}31^x\eta_{sp}) \, cm^3/g$$

wobei

$$\eta_{sp} = \frac{t}{t_0} - 1 \quad \text{(spezifische Viskosität)},$$

wobei t die Fließzeit der Lösung mit einer Hagenbach-Couette Korrektur, $t_0$ die Fließzeit des Lösemittels Isooktan mit Hagenbach-Couette Korrektur und c die Konzentration der Lösung in $g/cm^3$ angibt. Die mittlere relative Molmasse $M_v$ (Viskositätsmittel) berechnet sich aus der folgenden Formel:

$$\sqrt[0.65]{\frac{J_0 \times 10^2}{3.06}}$$

Polyisobutylene im Sinne der vorliegenden Erfindung werden bevorzugt über eine kationische Polymerisation von Isobuten (2-Methylpropen) synthetisiert in einem Temperaturbereich zwischen etwa -100°C und etwa 0°C. Die Temperatur beeinflusst dabei die Molmasse des solchermaßen erzeugten Polyisobutens, je niedriger die Temperatur ist, desto höher ist die Molmasse desselben. Üblicherweise werden Bortrifluorid oder Aluminiumtrichlorid in wässriger oder alkoholischer Lösung als Initiatoren eingesetzt.

Das mindestens eine erste Polyisobutylen weist vorteilhafterweise einen Staudinger-Index $J_0$ in einem Bereich von etwa 22 $cm^3/g$ bis etwa 65 $cm^3/g$ auf, und noch weiter bevorzugt einen Staudinger-Index $J_0$ in einem Bereich von etwa 25 $cm^3/g$ bis etwa 45 $cm^3/g$.

Bevorzugt weist das mindestens eine erste Polyisobutylen eine mittlere relative Molmasse $M_V$ (Viskositätsmittel) in einem Bereich von etwa 24.000 g/mol, bevorzugt von etwa 35.000 g/mol, bis etwa 130.000 g/mol, bevorzugt bis etwa 95.000 g/mol, und weiter bevorzugt eine mittlere relative Molmasse $M_V$ in einem Bereich von etwa 30.000 g/mol, bevorzugt von etwa 37.000 g/mol, bis etwa 75.000 g/mol, bevorzugt bis etwa 70.000 g/mol, auf. Das mindestens eine erste Polyisobutylen ist vorteilhafterweise in einer Menge in einem Bereich von etwa 28 Gew.-% bis etwa 60 Gew.-%, weiter bevorzugt in einer Menge in einem Bereich von etwa 33 Gew.-% bis etwa 50 Gew.-%, jeweils bezogen auf die Gesamtmenge der mindestens einen Verbindungslage, von dieser umfasst.

Das mindestens eine zweite Polyisobutylen weist bevorzugt einen Staudinger-Index $J_0$ in einem Bereich von etwa 106 cm$^3$/g bis etwa 160 cm$^3$/g auf. Bevorzugt weist das mindestens eine zweite Polyisobutylen eine mittlere relative Molmasse $M_V$ in einem Bereich von etwa 250.000 g/mol bis etwa 600.000 g/mol, bevorzugt bis etwa 550.000 g/mol, auf. Bevorzugt ist das mindestens eine zweite Polyisobutylen in einer Menge in einem Bereich von etwa 10 Gew.-% bis etwa 35 Gew.-%, weiter bevorzugt in einer Menge in einem Bereich von etwa 13 Gew.-% bis etwa 28 Gew.-%, jeweils bezogen auf die Gesamtmenge der mindestens einen Verbindungslage, von dieser umfasst.

Das mindestens eine dritte Polyisobutylen weist bevorzugt einen Staudinger-Index $J_0$ in einem Bereich von etwa 400 cm$^3$/g bis etwa 800 cm$^3$/g, und noch weiter bevorzugt einen Staudinger-Index $J_0$ in einem Bereich von etwa 500 cm$^3$/g bis etwa 700 cm$^3$/g, auf. Bevorzugt weist das mindestens eine dritte Polyisobutylen eine mittlere relative Molmasse $M_V$ in einem Bereich von etwa 1.500.000 g/mol, bevorzugt von etwa 2.000.000 g/mol, bis etwa 6.000.000 g/mol, bevorzugt bis etwa 5.000.000 g/mol, weiter bevorzugt in einem Bereich von etwa 3.000.000 g/mol bis etwa 5.000.000 g/mol, bevorzugt bis etwa 4.800.000 g/mol, auf. Das mindestens eine dritte Polyisobutylen ist vorteilhafterweise in einer Menge in einem Bereich von etwa 1 Gew.-% bis etwa 20 Gew.-%, weiter bevorzugt in einer Menge in einem Bereich von etwa 2 Gew.-% bis etwa 10 Gew.-%, noch weiter bevorzugt in einer Menge in einem Bereich von etwa 3 Gew.-% bis etwa 8 Gew.-%, jeweils bezogen auf die Gesamtmenge der mindestens einen Verbindungslage, von dieser umfasst.

Das Verhältnis des mindestens einen ersten Polyisobutylens, also der Gesamtmenge des eingesetzten ersten Polyisobutylens, auch wenn eine Mischung vorliegt, zu dem mindestens einen zweiten Polyisobutylen, das heißt der Gesamtmenge des zweiten Polyisobutylens, auch wenn dies in einer Mischung vorliegt, liegt vorteilhafterweise in einem Bereich von etwa 2,5 : 1 bis etwa 1 : 2,5, weiter bevorzugt in einem Bereich von etwa 2,2 : 1 bis etwa 1 : 1.

Die eingesetzten Polyisobutylene, also sowohl das erste, das zweite, als auch das dritte Polyisobutylen, weisen vorteilhafterweise eine Glasübergangstemperatur Tg (kalorimetrisch durch DSC gemessen) von weniger als -50°C, weiter bevorzugt weniger als -58°C, auf. Besonders bevorzugt liegt die Glasübergangstemperatur des mindestens einen ersten, des mindestens einen zweiten und des mindestens eins dritten Polyisobutylens in einem Bereich von etwa -55°C bis etwa -68°C, weiter bevorzugt in einem Bereich von etwa -58°C bis etwa -66°C. Das höher molekulare, mindestens eine zweite Polyisobutylen kann damit noch als eine hochviskose Flüssigkeit angesprochen werden, und weist eine gewisse Kriechneigung auf.

Unter dem Begriff Butylkautschuk werden im Sinne der vorliegenden Erfindung insbesondere verstanden Co- oder Block-Co-Polymere von Isobuten mit etwa 0,5 Gew.-% bis etwa 5 Gew.-% Isopren, bezogen auf die Gesamtmenge des Butylkautschuks, die insbesondere durch kationische Polymerisation, weiter bevorzugt im Lösemittel Methylchlorid, hergestellt werden. Über das eingesetzte Isopren und die in diesem vorhandenen Kohlenstoff-Kohlenstoff-Doppelbindungen, die als funktionelle Gruppen wirken, kann eine Vernetzungsreaktion initiiert werden. Im Sinne der vorliegenden Erfindung fallen unter den Begriff Butylkautschuk insbesondere auch halogenierte Butylkautschuke, insbesondere solche, die chloriert bzw. bromiert sind (Chlorbutylkautschuk bzw. Brombutylkautschuk). Es können auch Gemische mehrerer Butylkautschuke eingesetzt werden, das heißt mehr als mindestens ein Butylkautschuk.

Der mindestens eine erste, bevorzugt depolymerisierte, Butylkautschuk wird bevorzugt durch Depolymerisation von Butylkautschuken (IIR) erhalten. Der mindestens eine erste Butylkautschuk weist ein geringes Molekulargewicht auf. Er liegt besonders bevorzugt bei 23°C in flüssiger Form vor. Dem gegenüber ist der mindestens eine dritte Butylkautschuk nicht depolymerisiert und weist ein im Vergleich zum ersten Butylkautschuk hohes Molekulargewicht auf. Der mindestens eine dritte Butylkautschuk liegt vorteilsweise bei 23°C in fester Form vor.

Der mindestens eine erste, bevorzugt depolymerisierte, Butylkautschuk weist bevorzugt eine scheinbare Viskosität nach Brookfield gemäß DIN EN ISO 2555 : 2000-01 bei 66°C in einem Bereich von etwa 600.000 mPa ·s bis etwa 1.600.000 mPa ·s, weiter bevorzugt in einem Bereich von etwa 700.000 mPa ·s bis etwa 1.500.000 mPa ·s, auf. Bevorzugt weist der mindestens eine erste, bevorzugt depolymerisierte, Butylkautschuk ein mittleres Molekulargewicht Mw in einem Bereich von etwa 20.000 bis etwa 60.000 auf. Der mindestens eine erste, bevorzugt depolymerisierte, Butylkautschuk weist vorteilhafterweise die Eigenschaft auf, bereits bei niedrigen Temperaturen, insbesondere bei Raumtemperaturen von beispielsweise 20°C oder 23°C, oder aber auch bei leicht erhöhten Temperaturen von beispielsweise 40°C bis 50°C, eine Vernetzungsreaktion aufgrund der in diesem vorhandenen ungesättigten Kohlenstoff-Kohlenstoff-Doppelbindungen einzugehen. Bevorzugt ist der erste Butylkautschuk von der Verbindungslage in einer Menge in einem Bereich von etwa 20 Gew.-% bis etwa 66 Gew.-%, bevorzugt in einer Menge in einem Bereich von etwa 28 Gew.-% bis etwa 60 Gew.-%, weiter bevorzugt in einer Menge in einem Bereich von etwa 33 Gew.-% bis etwa 50 Gew.-%, jeweils bezogen auf die Gesamtmenge der mindestens einen Verbindungslage, von dieser umfasst.

Der mindestens eine zweite, zumindest teilweise vernetzte (im Folgenden auch als teilweise vorvernetzt bezeichnet) Butylkautschuk, der einen geringeren Anteil ungesättigter Bindungen aufweist als übliche Butylkautschuke, weist bevorzugt eine Mooney-Viskosität ML(1+3) bei 127°C in einem Bereich von etwa 70 MU bis etwa 93 MU, weiter bevorzugt in einem Bereich von etwa 78 MU bis etwa 91 MU, gemessen gemäß ISO 289 : 2005 oder gemäß ASTM 1604-04, auf. Die spezifische Dichte des mindestens einen zweiten, teilweise vernetzten Butylkautschuks liegt vorteilhafterweise bei einer Temperatur von 25°C gemäß ASTM D1875 in der Version von 2003 in einem Bereich von etwa 0,5 bis etwa 1,1, bevorzugt in einem Bereich von etwa 0,9 bis etwa 0,98. Besonders bevorzugt ist der zweite Butylkautschuk in einer Menge in einem Bereich von etwa 1 Gew.-% bis etwa 20 Gew.-%, weiter bevorzugt in einer Menge in einem Bereich von etwa 2 Gew.-% bis etwa 10 Gew.-%, noch weiter bevorzugt in einer Menge in einem Bereich von etwa 3 Gew.-% bis etwa 8 Gew.-%, jeweils bezogen auf die Gesamtmenge der mindestens einen Verbindungslage, von der mindestens einen Verbindungslage umfasst.

Der mindestens eine dritte Butylkautschuk weist vorteilhafterweise ein mittleres Molekulargewicht $M_w$ in einem Bereich von etwa 200.000 bis etwa 1.800.000, weiter bevorzugt in einem Bereich von etwa 250.000 bis etwa 600.000, auf. Bevorzugt weist der mindestens eine dritte Butylkautschuk eine Mooney-Viskosität ML(1+8) bei 125°C in einem Bereich von etwa 30 MU bis etwa 60 MU, weiter bevorzugt in einem Bereich von etwa 40 MU bis etwa 59 MU, noch weiter bevorzugt in einem Bereich von etwa 42 MU bis etwa 58 MU, und noch weiter bevorzugt in einem Bereich von etwa 40 MU bis etwa 55 MU, gemessen gemäß ISO 289 : 2005, auf. Der mindestens eine dritte Butylkautschuk ist vorteilhafterweise in einer Menge in einem Bereich von etwa 10 Gew.-% bis etwa 50 Gew.-%, weiter bevorzugt in einer Menge in einem Bereich von etwa 35 Gew.-% bis etwa 46 Gew.-%, und weiter bevorzugt in einer Menge in einem Bereich von etwa 15 Gew.-% bis etwa 35 Gew.-%, jeweils bezogen auf die Gesamtmenge der mindestens einen Verbindungslage, von der mindestens einen Verbindungslage umfasst.

Vorteilhafterweise weist der mindestens eine dritte Butylkautschuk Werte für die Ungesättigtheit in einem Bereich von etwa 1 Mol-% bis etwa 3 Mol-%, weiter bevorzugt in einem Bereich von etwa 1,3 Mol-% bis etwa 2,5 Mol-%, auf. Dies bedeutet, dass bevorzugt etwa 1 Mol-% bis etwa 3 Mol-%, weiter bevorzugt etwa 1,3 Mol-% bis etwa 2,5 Mol-% ungesättigte Bindungen, das heißt Kohlenstoff-Kohlenstoff-Doppelbindungen, als funktionelle Gruppen in einem mindestens einen dritten Butylkautschuk vorliegen. Besonders bevorzugt ist der mindestens eine dritte Butylkautschuk hergestellt durch eine Co-Polymerisation von Isobuten und Isopren in Methylchlorid als Lösemittel. Die Ungesättigtheit (der Grad der Unsättigung) des mindestens einen dritten Butylkautschuks kann auch bei etwa 1,5 Mol-%, insbesondere bei 1,5 ± 0,5 Mol-%, liegen. Die mindestens eine Verbindungslage umfasst vorteilhafterweise den dritten Butylkautschuk, und bevorzugt keinen weiteren Butylkautschuk und kein Polyisobutylen, da er in Hinblick auf die Einbettung des mindestens einen bidirektionalen Gewebes die in dem Gewebe vorliegenden Ausnehmungen beziehungsweise Frei- oder Leerräume aufgrund seiner Fließfähigkeit gut ausfüllen kann.

Das für die Verbindungslage eingesetzte Material umfassend mindestens einen Butylkautschuk und/oder mindestens ein Polyisobutylen, bevorzugt mindestens einen Butylkautschuk und kein Polyisobutlyen, weiter bevorzugt genau einen Butylkautschuk und kein Polyisobutylen, ist in Hinblick auf das mindestens eine bidirektionale Gewebe derart ausgewählt, dass es eine Einbettung desselben ermöglicht. Weiter bevorzugt ist das Material der mindestens einen Verbindungslage derart eingestellt, dass es in der Lage ist, bei Zusammenführung in Form insbesondere eines Aufbringens auf einer Außenseite des bidirektionalen Gewebes unter Einwirkung von Druck in die Ausnehmung und Leerräume des Gewebes einzudringen und auf der der Aufbringung gegenüberliegenden Außenseite des Gewebes nach Durchtritt durch das Gewebe eine Schicht zu bilden, die eine hinreichende Klebefähigkeit aufweist. Das solchermaßen erhaltene Korrosionsschutzband ist in der Lage, eine gute Verbindung zu einem vor Korrosion zu schützenden Gegenstand, insbesondere in Form einer Umhüllung auf Rohren, oder zu einer außenliegenden Oberfläche der vorhergehenden Wicklung zu Erzielung einer vollflächigen Verwachsung zu erzeugen. Des Weiteren ist das eingesetzte Material derart ausgewählt, dass es das mindestens eine bidirektionale Gewebe auch unter Zug bei Aufbringung eines Korrosionsschutzbandes als auch nach Aufbringung zumindest teilweise einbettet und eine Verdrückung des Materials aus dem Gewebe heraus zumindest teilweise verhindert.

Bevorzugt umfasst die mindestens eine Verbindungslage neben Polyisobutylen und/oder Butylkautschuk mindestens ein Füllmaterial, mindestens ein Antioxidationsmittel, mindestens ein Vernetzungsmittel, mindestens ein Kohlenwasserstoffharz, mindestens ein Prozessöl, mindestens ein Elastomer, dabei bevorzugt mindestens ein Polyethylen, und/oder mindestens ein Stabilisationsmittel. Die genannten weiteren Bestandteile können alleine oder in Kombination der mindestens einen Verbindungslage zugesetzt sein. Besonders bevorzugt umfasst die mindestens eine Verbindungslage mindestens ein Füllmaterial. Das mindestens eine Füllmaterial ist vorzugsweise in einer Menge in einem Bereich von etwa 10 Gew.-%, oder etwa 20 Gew.-% bis etwa 70 Gew.-%, weiter bevorzugt in einer Menge in einem Bereich von etwa 30 Gew.-% bis etwa 65 Gew.-%, noch weiter bevorzugt in einer Menge in einem Bereich von etwa 33 Gew.-% bis etwa 50 Gew.-%, und noch weiter bevorzugt in einer Menge in einem Bereich von etwa 10 Gew.-% bis etwa 25 Gew.-%, jeweils bezogen auf die Gesamtmenge der mindestens einen Verbindungslage, von dieser umfasst. Besonders bevorzugt ist das mindestens eine Füllmaterial pulverförmig oder faserförmig ausgebildet, weiter bevorzugt ist es pulverförmig ausgebildet. Unter dem Begriff faserförmig fallen im Sinne der vorliegenden Erfindung auch solche Füllmaterialien, welche eine nadelförmige Struktur aufweisen.

Besonders bevorzugt umfasst die mindestens eine Verbindungslage mindestens ein erstes pulverförmiges Füllmaterial und mindestens ein zweites faserförmiges Füllmaterial. Besonders bevorzugt ist bei einer solchen kombinierten Zugabe mindestens eines pulverförmigen und mindestens eines faserförmigen Füllmateriales das faserförmige Füllmaterial in einer Menge bis maximal zu derjenigen des pulverförmigen Füllmateriales zugegeben. Ein pulverförmiges als auch ein faserförmiges Füllmaterial können in einer Menge in einem Bereich von etwa 10 Gew.-% bis etwa 40 Gew.-%, bevorzugt in einer Menge in einem Bereich von etwa 12 Gew.-% bis etwa 25 Gew.-%, jeweils bezogen auf die Gesamtmenge der mindestens einen Verbindungslage, jeweils von der mindestens einen Verbindungslage umfasst sein.

Besonders bevorzugt umfasst die mindestens eine Verbindungslage einen dritten Butylkautschuk, weiter bevorzugt ausschließlich nur mindestens einen dritten Butylkautschuk, besonders bevorzugt genau einen dritten Butylkautschuk und keinen ersten und/oder zweiten Butylkautschuk, und weiter bevorzugt auch kein Polyisobutylen. Besonders bevorzugt weist der mindestens eine dritte Butylkautschuk Werte für die Ungesättigtheit in einem Bereich von etwa 1,4 Mol-% bis etwa 1,8 Mol-% auf. Besonders bevorzugt weist der mindestens eine dritte Butylkautschuk eine Mooney-Viskosität ML(1+8) bei 125°C in einem Bereich von etwa 46 MU bis etwa 56 MU, gemessen gemäß ISO 289 : 2005, auf

Bevorzugt besteht das Korrosionsschutzband aus einem bidirektionalen Gewebe und einer Verbindungslage, hergestellt aus einem Material ausgewählt aus einer Gruppe umfassend mindestens einen Butylkautschuk und/oder mindestens ein Polyisobutylen, bevorzugt umfassend einen dritten Butylkautschuk und kein Polyisobutylen, wobei in der Verbindungslage das bidirektionale Gewebe mindestens teilweise eingebettet ist. Bevorzugt besteht das Korrosionsschutzband aus einem bidirektionalen Gewebe, einer abziehbaren Schutzfolie und einer Verbindungslage, hergestellt aus einem Material ausgewählt aus einer Gruppe umfassend mindestens einen Butylkautschuk und/oder mindestens ein Polyisobutylen, wobei in der Verbindungslage das bidirektionale Gewebe mindestens teilweise eingebettet ist. Weiter bevorzugt besteht das Korrosionsschutzband aus einem bidirektionalen Gewebe, einer abziehbaren Schutzfolie und einer Verbindungslage, hergestellt aus einem Material ausgewählt aus einer Gruppe umfassend mindestens einen Butylkautschuk und/oder mindestens ein Polyisobutylen, wobei in der Verbindungslage das bidirektionale Gewebe mindestens teilweise eingebettet ist, sowie aus einer ergänzenden Trägerfolie, insbesondere einer solchen, die auf beiden Außenseiten Haftvermittlungsschichten aufweist, und gegebenenfalls aus einer auf der von dem Gewebe aus gesehen außenliegenden Seite der Trägerfolie angeordneten zweiten Verbindungslage. "Besteht" bedeutet dabei im Sinn der vorliegenden Anmeldung, dass das Korrosionsschutzband keine andere Lage umfasst.

Bevorzugt umfasst das Korrosionsschutzband eine Schutzfolie, die abziehbar ist, insbesondere bei Umwicklung eines Rohres, einer Pipeline oder ähnlichem mit dem erfindungsgemäßen Korrosionsschutzband.

Erfindungsgemäß ist in der mindestens einen Verbindungslage mindestens ein bidirektionales Gewebe mindestens teilweise eingebettet. Bevorzugt umfasst das mindestens eine bidirektionale Gewebe mindestens ein Schussgarn und mindestens ein Kettgarn. Ein bidirektionales Gewebe ist ein Gewebe mit unterschiedlichen Eigenschaften in der Richtung des mindestens einen Schussgarns und in der Richtung des mindestens einen Kettgarns. Ein Kettgarn sind diejenigen Fäden, die in der Weberei in einem Webstuhl in Längsrichtung aufgespannt sind. Im fertigen Gewebe liegen sie parallel zur Webkante, während sogenannte Schussgarne quer, also im Wesentlichen rechtwinklig, zu dem Kettgarn verlaufen. Ein Schussgarn ist bei der Herstellung eines textilen Gewebes jenes, das zu den im Webstuhl aufgespannten Kettgarne quer liegt. Schuss ist der Begriff für das Garn, das über die Kette hin und her geschoben wird, um ein Gewebe zu erzeugen. Bevorzugt liegt das mindestens eine Schussgarn in der Querrichtung des Korrosionsschutzbands. Bevorzugt liegt das mindestens eine Kettgarn in der Längsrichtung des Korrosionsschutzbands, und ist im Wesentlichen rechtwinklig zu dem Schussgarn ausgerichtet. Bevorzugt entspricht die Längsrichtung des Korrosionsschutzbands der Wickelrichtung des Korrosionsschutzbands auf einem Rohr, einem Tank oder einem Bestandteil von einem Tank. Zur Verringerung der Leerräume, die sich bei Umwicklungen von Rohren mit Korrosionsschutzbändern bilden können, auch im Bereich von Schweißraupen, haben die Erfinder gefunden, dass das mindestens eine bidirektionale Gewebe in Wickelrichtung des Korrosionsschutzbandes einerseits steifere, andererseits elastischere Eigenschaften aufweisen muss, als das quer zur Wickelrichtung der Fall ist. Bidirektionale Gewebe mit Kettfäden mit einer höheren Biegesteifigkeit als auch einer höheren Dehnung als die Schussfäden sind daher bevorzugt. Durch die größere Biegesteifigkeit, Elastizität und Dehnung des Gewebes in Wickelrichtung übt das unter Zug um das Rohr gewickelte Korrosionsschutzband eine größere Kraft in Richtung auf das zu umwickelnde Rohr aus, die aufgrund der weicheren Eigenschaften des Gewebes mit einer geringeren Biegesteifigkeit und damit des Korrosionsschutzbandes quer zur Wickelrichtung dazu führen, dass sich das Korrosionsschutzband enger an das Rohr anformt, so dass die Leerräume in Überlappungsbereichen oder bei Schweißraupen verringert oder gar vollständig vermieden werden können. Das erfindungsgemäße Korrosionsschutzband kann sich daher vorteilshafterweise gut an die Außenkonturen insbesondere von Rohren anformen und dadurch besser vor Korrosion schützen, aber auch im Überlappungsbereich einer Spiralkorrosion vorbeugen.

Bevorzugt umfasst das mindestens eine Schussgarn und das mindestens eine Kettgarn ein Material ausgewählt aus einer Gruppe umfassend Polypropylen, Polyethylen, Polyamide, Aramidfasern, Polyester oder Naturfasern oder eine Kombination von mindestens zwei von den genannten Materialien. Bevorzugt sind Naturfasern ausgewählt aus einer Gruppe umfassend Jute, Leinen, Baumwolle oder Hanf. Polyethylen ist von niedriger Festigkeit, Härte und Steifigkeit, besitzt aber eine hohe Dehnbarkeit und Schlagzähigkeit sowie eine geringe Gleitreibung. Die Eigenschaften von Polypropylen ähneln Polyethylen, es ist jedoch etwas härter und wärmebeständiger. Polypropylen besitzt eine ausgezeichnete Widerstandsfähigkeit gegen Ermüdung. Polyamide zeichnen sich durch eine hohe Festigkeit, Steifigkeit und Zähigkeit aus. Viele Eigenschaften der Polyamide werden weitgehend durch die Amidgruppen dominiert, die über Wasserstoffbrückenbindungen miteinander wechselwirken. Aramidfasern bestehen aus aromatischen Polyamiden, und in ihrer chemischen Struktur weisen diese lange Ketten aus synthetischen Polyamiden auf, in denen mindestens 85 % der Amidgruppen (-CO-NH-) direkt mit zwei aromatischen Gruppen verbunden sind, auf. Die Molekülketten der Aramidfasern weisen eine hohe Orientierung und Kristallinität auf, was der Faser gute mechanische Eigenschaften wie Zug-/Reißfestigkeit und eine gute Dimensionsstabilität verleiht. Die Familie der Polyester ist eine große Stoffgruppe, mit teilweise stark unterschiedlichen Eigenschaften. Besonders bevorzugt sind Polyethylenterephthalate (PET). Durch ihre hohe Dehnfestigkeit mit niedriger Dehnbarkeit und Härte eignen sich Jutefasern besonders für die Herstellung grober, fester und widerstandsfähiger Garne. Leinenfaser sind steif und reißfest. Aufgrund seiner geringen Elastizität ist Leinen knitteranfällig, die Reißfestigkeit macht das Leinen strapazierfähig. Baumwolle ist eine natürliche Faser pflanzlichen Ursprungs mit einer chemischen Struktur auf Basis von Cellulose. Baumwolle hat eine hohe Feuchtigkeitsaufnahmefähigkeit. Die Bruchfestigkeit von Hanffasern ist ein wenig höher als die der vergleichbaren Flachsfaser, und die Reißfestigkeit beträgt etwa 350 N/mm². Die Dehnbarkeit liegt dagegen nur bei zwei bis drei Prozent und die Flexibilität ist abhängig von Bündelaufbau und der Feinheit der Fasern. In Garnen werden Festigkeit und Flexibilität erhöht, indem man Hanf- und Flachsfasern gemeinsam verspinnt und so die Eigenschaften beider Fasern nutzt. Bevorzugt ist das Schussgarn aus Polypropylen und das Kettgarn aus Polyethylen, Polypropylen oder Polyester, dabei insbesondere aus Polyethylenterephthalat, hergestellt.

Bevorzugt weist das mindestens eine Gewebe eine Reißfestigkeit gemäß DIN EN ISO 13934-1 in einer Querrichtung des mindestens einen bidirektionalen Gewebes in einem Bereich zwischen etwa 200 N/5 cm und etwa 2500 N/5 cm, bevorzugter in einem Bereich zwischen etwa 200 N/5 cm und etwa 1400 N/5 cm weiter bevorzugt in einem Bereich zwischen etwa 250 N/5cm und etwa 1200 N/5cm, insbesondere bevorzugt in einem Bereich zwischen etwa 300 N/5cm und etwa 1000 N/5cm auf, und ganz besonders bevorzugt in einem Bereich zwischen etwa 1600 N/5 cm und etwa 2400 N/5 cm. Gemäß DIN EN ISO 139434-1 muss für die Reißfestigkeitsmessung die Breite jedes Prüfmusters 50 mm ± 0,5 mm (ohne Ränder) betragen, und seine Länge muss so bemessen sein, dass eine Messlänge von 200 mm möglich ist. Bevorzugt weist das mindestens eine Gewebe in Querrichtung eine Dehnung gemäß DIN EN ISO 13934-1 in einem Bereich zwischen etwa 2 % und etwa 100 %, weiter bevorzugt in einem Bereich zwischen etwa 10 % und etwa 80 %, besonders bevorzugt in einem Bereich zwischen etwa 20 % und etwa 60 %, und noch weiter bevorzugt in einem Bereich zwischen etwa 10 % und etwa 24 % auf. Weiter bevorzugt weist das mindestens eine Gewebe mit einem Schussgarn aus Jute eine Dehnung von etwa 2% in Querrichtung auf. Weiter bevorzugt weist das mindestens eine Gewebe mit einem Schussgarn aus Baumwolle eine Dehnung von etwa 20 % in Querrichtung auf. Bevorzugt weist das mindestens eine Gewebe eine mittlere Biegesteifigkeit nach der Balkenmethode gemäß DIN 53121:2014-08 in einer Querrichtung des mindestens einen bidirektionalen Gewebes in einem Bereich zwischen etwa 0,1 N*mm und etwa 0,8 N*mm, weiter bevorzugt in einem Bereich zwischen 0,15 N*mm und etwa 0,75 N*mm, besonders bevorzugt in einem Bereich zwischen 0,18 N*mm und etwa 0,70 N*mm, und noch weiter bevorzugt in einem Bereich zwischen 0,2 N*mm und etwa 0,50 N*mm auf. Die Messung der mittleren Biegesteifigkeit nach der Balkenmethode gemäß DIN 53121:2014-08 erfolgte in der vorliegenden Erfindung mit Proben mit einer Probenbreite von etwa 30 mm, mit einer Messlänge von etwa 10 mm, einem maximalen Biegewinkel von etwa 7,5° und einer Verformungsgeschwindigkeit von etwa 0,02°/s. Das mindestens eine Gewebe weist insbesondere in Hinblick auf die vorstehenden Wertebereiche für die mittlere Biegesteifigkeit eine hinreichende Anschmiegsamkeit in der Querrichtung auf und vermeidet die Ausbildung von Hohlräumen im Überlappungsbereich während der Wicklung des erfindungsgemäßen Korrosionsschutzbandes um ein Rohr, einer Pipeline oder ähnlichem, oder vermindert die Ausbildung dieser Hohl- oder Leerräume, ebenso wie dies bei Unebenheiten auf einem Rohr, beispielsweise bei Schweißraupen, der Fall ist.

Bevorzugt ist das Schussgarn bandförmig. Weiter bevorzugt ist das Schussgarn fibrilliert. Fibrilliertes Schussgarn, insbesondere in Form von Bändchen, weist eine geringere Biegesteifigkeit auf als nicht fibrilliertes Schussgarn. Bevorzugt ist das Schussgarn ein Zwirn. Ein Zwirn ist ein Garn, der aus mehreren zusammengedrehten Garnen besteht. Ein Zwirn hat eine wesentlich höhere Reißfestigkeit als nicht verzwirnte einfache Garne zusammen. Zwirne sind mechanisch widerstandsfähig. Bevorzugt ist das Kettgarn als Monofilament ausgebildet.

Bevorzugt ist der Drehrichtung des Schussgarns Z oder S. Eine Drehrichtung Z weist das Garn auf, wenn die Fasern im Garn bei senkrecht gehaltenem Garnen in Richtung des Schrägstrichs des Buchstaben Z verlaufen. Verläuft es entgegengesetzt, so handelt sich dabei um eine S-Drehung.

Bevorzugt ist das Schussgarn ein Core-Spun-Garn. Core-Spun-Garne weisen eine zweiteilige Struktur mit Kern und Hülle auf. Der Kern umfasst bevorzugt Polyethylen und die Hülle umfasst weiter bevorzugt Polypropylen.

Bevorzugt ist das Schussgarn mit einem Kernspinnverfahren erstellt. Mit einem Kernspinnverfahren können Filamente mit Stapelfasern während einer Garnherstellung bedeckt werden. Eine Ringspinnmaschine wird dabei derart modifiziert, so dass ein Kern zusammen mit einer Hülle beim Verdrehen erzeugbar ist.

Bevorzugt weist das mindestens eine Schussgarn einen Titer in einem Bereich von etwa 60 Tex bis etwa 140 Tex, weiter bevorzugt von etwa 70 Tex bis etwa 130 Tex, besonders bevorzugt von etwa 80 Tex bis etwa 120 Tex, auf. Der Titer wird als Gewicht pro Längeneinheit angegeben. Die abgeleitete Einheit "Tex" beschreibt die Garnstärke des Garns in Gramm/Kilometer.

Bevorzugt weist das mindestens eine Gewebe eine Reißfestigkeit gemäß DIN EN ISO 13934-1 in einer Längsrichtung des mindestens einen bidirektionalen Gewebes in einem Bereich zwischen etwa 400 N/5 cm und etwa 4000 N/5 cm , weiter in einem Bereich zwischen etwa 190 N/5 cm und etwa 3000 N/5 cm, weiter bevorzugt in einem Bereich zwischen 300 N/5 cm und etwa 2800 N/5cm, besonders bevorzugt in einem Bereich zwischen 500 N/5cm und etwa 2500 N/5 cm, und ganz besonders bevorzugt in einem Bereich zwischen 1350 N/5cm und etwa 2200 N/5 cm, auf. Bevorzugt weist das mindestens eine Gewebe in Längsrichtung eine Dehnung gemäß DIN EN ISO 13934-1 in einem Bereich zwischen etwa 2 % und etwa 100 %, weiter bevorzugt zwischen etwa 10 % und etwa 80 %, besonders bevorzugt zwischen etwa 20 % und etwa 75 %, und ganz besonders bevorzugt zwischen etwa 28 % und etwa 70 %, noch weiter bevorzugt bis etwa 60 %, auf. Bevorzugt weist das mindestens eine Gewebe eine mittlere Biegesteifigkeit nach der Balkenmethode gemäß DIN 53121:2014-08 in einer Längsrichtung des mindestens einen bidirektionalen Gewebes in einem Bereich zwischen etwa 0,2 N*mm und etwa 1,5 N*mm, weiter bevorzugt in einem Bereich zwischen 0,3 N*mm und etwa 1,4 N*mm, besonders bevorzugt in einem Bereich zwischen 0,4 N*mm und etwa1,3 N*mm, auf. Die Eigenschaften des mindestens einen Kettgarns vermeiden einerseits die Faltenbildung des Korrosionsschutzbands, wenn dieses auf einem Rohr appliziert wird. Die Reißfestigkeit in Längsrichtung des mindestens einen bidirektionalen Gewebes beeinflusst maßgeblich die Wickelfähigkeit und Endperformance des Bandes. Das Korrosionsschutzband mit einem solchen Geweben erfüllt die Anforderungen der NACE SP0109-2019 (> 192,5 N/cm nach ASTM D1000). Die Eigenschaften des mindestens einen Kettgarns und des Gewebes geben dem Korrosionsschutzband Festigkeit und Formstabilität. Dank der Festigkeit und Formstabilität des Korrosionsschutzbandes in Benutzung, beispielsweise bei Bewegungen des Rohres und der Übertragung von Kräften aus dem umgebenden Erdreich, wird eine Faltenbildung vermieden. Auch während der Applikation des Korrosionsschutzbandes wird dank der Festigkeit und Formstabilität des Korrosionsschutzbandes eine Faltenbildung vermeidbar. Zudem wird gerade in Hinblick auf die angegebenen Wehrbereiche für die mittlere Biegesteifigkeit in Längsrichtung, die vorzugsweise höher ist als die mittlere Biegesteifigkeit in Querrichtung, dafür gesorgt, dass eine hinreichende Kraft bei Wicklung unter Zug auf beispielsweise ein Rohr ausgeübt wird, so dass sich aufgrund der geringeren mittleren Biegesteifigkeit in Querrichtung das Korrosionsschutzband an das Rohr besser anschmiegen und dessen Außenkontur folgen und damit Leer- oder Hohlräume vermindern oder gar vermeiden kann.

Bevorzugt weist das mindestens eine Kettgarn einen Titer in einem Bereich von etwa 20 Tex bis etwa 100 Tex, weiter bevorzugt von etwa 30 Tex bis etwa 90 Tex, besonders bevorzugt von etwa 40 Tex bis etwa 80 Tex, auf.

Bevorzugt weist das mindestens eine bidirektionale Gewebe ein Reißfestigkeitsverhältnis in der Querrichtung zu der Längsrichtung in einem Bereich zwischen etwa 2:1 und etwa 1:20, bevorzugt in einem Bereich zwischen etwa 1:1,1 und etwa 1:15, weiter bevorzugt in einem Bereich zwischen etwa 1:3 und etwa 1:12, besonders bevorzugt in einem Bereich zwischen etwa 1:5 und etwa 1:9, und noch weiter bevorzugt in einem Bereich zwischen etwa 1,5:1 und etwa 1:2, auf. Bevorzugt weist das mindestens eine Kettgarn eine höhere Reißfestigkeit als das mindestens eine Schussgarn auf.

Bevorzugt weist das mindestens eine bidirektionale Gewebe ein Dehnungsverhältnis in Querrichtung zur Längsrichtung in einem Bereich zwischen etwa 0,5 und etwa 2, weiter bevorzugt in einem Bereich zwischen etwa 0,7 und etwa 1,8, besonders bevorzugt in einem Bereich zwischen etwa 0,9 und etwa 1,6, und noch weiter bevorzugt in einem Bereich zwischen etwa 0,5 und etwa 1,6,auf.

Erfindungsgemäß weist das mindestens eine bidirektionale Gewebe ein Verhältnis einer mittleren Biegesteifigkeit nach der Balkenmethode gemäß DIN 53121:2014-08 in Querrichtung zur Längsrichtung in einem Bereich zwischen 1:1,1 und etwa 1:8, bevorzugter zwischen etwa 1:1,3 und etwa 1:8, weiter bevorzugt in einem Bereich zwischen etwa 1:1,5 und etwa 1:6, besonders bevorzugt in einem Bereich zwischen etwa 1:1,7 und etwa 1:4, auf. In den vorstehend angegebenen Wertebereichen für die mittlere Biegesteifigkeit, die in Längsrichtung stets höher ist als in Querrichtung des Korrosionsschutzbandes, bezogen auf dessen Wickelrichtung, weist dieses eine hervorragende Anschmiegsamkeit an eine Außenkontur einer Oberfläche an, so dass, ebenso wie in Überlappungsbereichen bei Umwicklung eines rohrförmigen Gegenstandes, Leer- oder Hohlräume verringert oder gar vermieden werden und damit der Korrosionsschutz der geschützten Gegenstände verbessert ist.

Bevorzugt umfasst das mindestens eine bidirektionale Gewebe zwischen etwa 30 und etwa 90 Schussgarne pro 10 cm, weiter bevorzugt zwischen etwa 40 und etwa 80 Schussgarne pro 10 cm, besonders bevorzugt zwischen etwa 50 und etwa 70 Schussgarne pro 10 cm, und ganz besonders bevorzugt zwischen etwa 50 und etwa 110 Schussgarne pro 10 cm, und noch weiter bevorzugt zwischen etwa 60 und etwa 110 Schussgarne pro 10 cm. Bevorzugt umfasst das mindestens eine bidirektionale Gewebe zwischen etwa 120 und etwa 190 Kettgarne pro 10 cm, weiter bevorzugt zwischen etwa 130 und etwa 180 Kettgarne pro 10 cm, besonders bevorzugt zwischen etwa 140 und etwa 170 Kettgarne pro 10 cm, und noch weiter bevorzugt zwischen etwa 145 und etwa 190 Kettgarne pro 10 cm. Die Anzahl der Garne hängt von den verwendeten Garnen und ihren Eigenschaften sowie von den zu umwickelnden Rohren, Pipeline und ähnlichem ab. Wenn das Kettgarn sehr steif ist, ist eine geringere Anzahl von Garnen erforderlich, als wenn das Kettgarn weniger steif ist. Die Anzahl der Garne kann auch von dem Durchmesser des zu umwickelnden Rohrs abhängen.

Bevorzugt weist das mindestens eine bidirektionale Gewebe eine Dicke in einem Bereich zwischen etwa 0,2 mm und etwa 2 mm, weiter bevorzugt in einem Bereich zwischen etwa 0,3 mm und etwa 2,8 mm, besonders bevorzugt in einem Bereich zwischen 0,5 mm und etwa 2,5 mm, und noch weiter bevorzugt in einem Bereich zwischen etwa 0,5 mm und etwa 1 mm auf. Bevorzugt weist das mindestens eine bidirektionale Gewebe eine 1/1 Leinwandbindung auf.

Erfindungsgemäß ist in der mindestens einen Verbindungslage mindestens ein bidirektionales Gewebe mindestens teilweise eingebettet. Eingebettet bedeutet im Sinne der vorliegenden Anmeldung in ein größeres Ganzes eingebunden, einbezogen bzw. integriert. Das mindestens eine Gewebe ist in einer Verbindungslage eingebettet, wenn das einzubettende mindestens eine Gewebe innerhalb der Verbindungslage angeordnet, mithin von Material umgeben ist. Alternativ ist das mindestens eine Gewebe teilweise in einer Verbindungslage eingebettet derart, dass das mindestens eine Gewebe auf einer oder beiden Oberflächen der Verbindungslage zumindest teilweise sichtbar ist beziehungsweise offenliegt. Dies ist dann der Fall, wenn die im Gewebe vorhandenen Ausnehmungen oder Freiräume zwischen den Garnen im Wesentlichen vollständig mit dem Material der Verbindungslage gefüllt sind. Dabei kann auf einer Oberfläche der Verbindungslage kein Gewebe sichtbar sein oder offenliegen, mithin die entsprechende Seite des Gewebes vollständig mit dem Material der Verbindungslage überdeckt sein, während auf der gegenüberliegenden Oberfläche der Verbindungslage das Gewebe zumindest teilweise sichtbar beziehungsweise offengelegt ist, also im Wesentlichen die Freiräume im Gewebe mit dem Material der Verbindungslage gefüllt sind. Alternativ kann auch auf beiden Oberflächen der Verbindunglage das Gewebe zumindest teilweise sichtbar sein beziehungsweise offenliegen. Bevorzugt ist in der mindestens einen Verbindungslage zwischen etwa 50 % und etwa 99 % der äußeren Oberfläche des bidirektionalen Gewebes, weiter bevorzugt zwischen etwa 60 % und etwa 90 %, besonders bevorzugt zwischen etwa 70% und etwa 80%, eingebettet. Bevorzugt ist in der mindestens einen Verbindungslage das mindestens eine bidirektionales Gewebe vollständig eingebettet. In dieser Ausführungsform ist die Verbindungslage auf beiden Seiten des mindestens einen bidirektionalen Gewebes vorhanden und bedeckt dieses vollständig. Bevorzugt ist die Verbindungslage auf beiden Außenseiten des Gewebes angeordnet und bettet das Gewebe in diese ein. Weiter bevorzugt ist das Gewebe asymmetrisch in der Verbindungslage eingebettet, deren Stärke ist von einer Außenseite des Gewebes aus stärker als auf der gegenüberliegenden Seite.

Das erfindungsgemäße Korrosionsschutzband wird vorzugsweise mit Spannung gewickelt. Wie bereits weiter oben beschrieben werden Falten, insbesondere im Überlappungsbereich, und Leerräume im Überlappungsbereich durch das Korrosionsschutzband vermindert oder sogar vermieden. Dies ist möglich dank dem bidirektionalen Gewebe. Das mindestens eine Gewebe ist in Querrichtung anschmiegsam und in Längsrichtung steifer. Auch wird mit dem erfindungsgemäßen Korrosionsschutzband die Bindung im Überlappungsbereich der Wicklung zwischen der oberen Oberfläche beziehungsweise der Oberseite des Korrosionsschutzbandes der vorhergehenden Wicklung mit der unteren Oberfläche beziehungsweise der Unterseite des Korrosionsschutzbandes der nachfolgenden Wicklung verbessert. Durch die Verringerung bis Vermeidung der Hohlräume an der Überlappungsstufe wird auch die Oberfläche der Rohrleitung besser benetzt oder abgedeckt.

Die vorliegende Erfindung betrifft weiterhin ein Verfahren zur Herstellung eines Korrosionsschutzbandes wie vorstehend beschrieben, wobei mindestens ein Gewebe mit mindestens einer Verbindungslage zusammengefügt wird, wobei das mindestens eine bidirektionale Gewebe ein Verhältnis einer Biegesteifigkeit nach der Balkenmethode gemäß DIN 53121:2014-08 in Querrichtung zur Längsrichtung in einem Bereich zwischen 1:1,1 und etwa 1:8 aufweist. Bevorzugt wird das mindestens ein Gewebe mit der mindestens einen Verbindungslage durch einen Kalander, bevorzugt unter Druck, zusammengefügt. Bevorzugt wird in dem erfindungsgemäßen Verfahren das mindestens eine Gewebe in der mindestens einen Verbindungslage mindestens teilweise, weiter bevorzugt vollständig, eingebettet. Bevorzugt wird die Verbindungslage im Kalander mit dem bandförmigen bidirektionalen Gewebe auf einer ersten Außenseite desselben zusammengeführt und durch den Kalander das Material der Verbindungslage durch die Ausnehmungen oder Freiräume im Gewebeband gedrückt, so dass diese gefüllt und damit das Gewebe in der Verbindungslage eingebettet wird. Bevorzugt wird das Material der Verbindungslage über die Freiräume im Gewebe hinaus auf einer der ersten Außenseite gegenüberliegenden zweiten Außenseite des Gewebes gedrückt und bildet dort eine hinreichend klebefähige Schicht aus, um eine unmittelbare Verbindung mit dem vor Korrosion zu schützenden Gegenstand einzugehen oder gegebenenfalls mit einer Trägerschicht verbunden zu werden.

Bevorzugt wird das Material der mindestens einen Verbindungslage mittels eines Innenmischers hergestellt und im Kalanderprozess ausgewalzt und in diesem mit dem mindestens einen Gewebe zusammengefügt. Bevorzugt weist die mindestens eine Verbindungslage während des Mischprozesses eine Temperatur in einem Bereich von etwa 60°C bis etwa 170 °C, weiter bevorzugt in einem Bereich von etwa 80°C bis etwa 120 °C, besonders bevorzugt in einem Bereich von etwa 90°C bis etwa 110 °C auf.

Die vorliegende Erfindung betrifft weiterhin eine Verwendung eines Korrosionsschutzbandes zum Schutz von Rohren und Rohre umfassenden Anlagen, Tanks und Bestandteilen von Tanks. Ein Rohr oder ein rohrförmiger Körper ist ein langer zylindrischer Hohlkörper, der vor allem dazu dient, Gase, Flüssigkeiten, aber auch feste Körper weiterzuleiten. Ein Rohr kann z.B. ein Rohr der Wasserleitung oder der Fernheizung oder ein Bestandteil einer Pipeline sein. Bestandteile von Tanks sind zum Beispiel Tankböden, Metallbehälter, Armaturen und Tank-anschlüsse wie Einläufe und Ausläufe. Das Korrosionsschutzband kann einzeln oder in Kombination mit einem anderen Korrosionsschutzband verwendet werden.

Die vorliegende Erfindung betrifft weiterhin ein Verfahren zur Erzielung eines Korrosionsschutzes auf Rohren und Rohre umfassenden Anlagen, Tanks und Bestandteilen von Tanks mit einem mindestens zweilagigem Korrosionsschutzband, wobei das Rohr mit dem Korrosionsschutzband überlappend derart umwickelt wird, dass sich eine durchgängige Umhüllung ausbilden kann. Bevorzugt wird das Korrosionsschutzband mit Spannung umgewickelt. Bevorzugt wird das Korrosionsschutzband mit einer Zugkraft in einem Bereich zwischen etwa 2 N/cm bis etwa 50 N/cm, weiter bevorzugt zwischen etwa 5 N/cm bis etwa 40 N/cm, besonders bevorzugt zwischen etwa 10 N/cm bis etwa 30 N/cm, gewickelt. Diese hohe Spannung führt auch zu hohen Andruckkräften des Korrosionsschutzbandes auf die Oberfläche des zu umwickelnden Gegenstandes. Dies wiederum begünstigt das Verwachsen der Verbindungslage der oberen Lage des Korrosionsschutzbandes mit der Verbindungslage der unteren Lage des Korrosionsschutzbandes im Überlappungsbereich, so dass diese gemeinsam eine durchgängige Schicht ausbilden können, in die das Gewebe vollständig eingebettet ist.

Die vorliegende Erfindung betrifft weiterhin ein Rohr, Tank oder Bestandteil von einem Tank mit einem erfindungsgemäßen Korrosionsschutzband, wobei weiter bevorzugt das Rohr, der rohrförmige Gegenstand, die Pipeline, die Rohre der Rohre umfassenden Anlage, der Tank oder der Bestandteil eines Tanks sowie sonstige Anlagen und Einbauten mit dem Korrosionsschutzband umwickelt ist, vorzugsweise überlappend, weiter bevorzugt spiralförmig, beziehungsweise das erfindungsgemäße Korrosionsschutzband auf eine Oberfläche der genannten Bauteile aufgebracht ist.

Schließlich betrifft die vorliegende Erfindung die Verwendung eines bidirektionalen Gewebes wie vorstehend definiert in einem Korrosionsschutzband wie vorstehend beschrieben, bevorzugt eingebettet in mindestens einer Verbindungslage, bevorzugt in genau einer Verbindungslage.

Ein beispielhaftes Korrosionsschutzband, insbesondere zur Herstellung einer Umhüllung auf Rohren wie Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise eingebettet ist, wobei das mindestens eine bidirektionale Gewebe mindestens ein Schussgarn umfasst und wobei das mindestens eine Schussgarn ein Material umfasst ausgewählt aus einer Gruppe umfassend Polypropylen, Polyethylen, Polyamide, Aramidfasern, Polyester, Naturfasern oder eine Kombination von mindestens zwei von den genannten Materialien.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise eingebettet ist, wobei das mindestens eine bidirektionale Gewebe mindestens ein Kettgarn umfasst und wobei das mindestens eine Kettgarn ein Material umfasst ausgewählt aus einer Gruppe umfassend Polypropylen, Polyethylen, Polyamide, Aramidfasern, Polyester, Naturfasern oder eine Kombination von mindestens zwei von den genannten Materialien.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise eingebettet ist, wobei das mindestens eine bidirektionale Gewebe mindestens ein Kettgarn und mindestens ein Schussgarn umfasst und wobei das mindestens eine Kettgarn und das mindestens ein Schussgarn ein Material umfassen ausgewählt aus einer Gruppe umfassend Polypropylen, Polyethylen, Polyamide, Aramidfasern, Polyester, Naturfasern oder eine Kombination von mindestens zwei von den genannten Materialien.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise eingebettet ist, wobei das mindestens eine bidirektionale Gewebe mindestens ein Kettgarn und mindestens ein Schussgarn umfasst, wobei das mindestens eine Gewebe in einer Querrichtung eine Reißfestigkeit gemäß DIN EN ISO 13934-1 in einem Bereich zwischen etwa 200 N/5 cm und etwa 2500 N/5 cm aufweist und wobei das mindestens eine Kettgarn eine Reißfestigkeit gemäß DIN EN ISO 13934-1 in einem Bereich zwischen etwa 400 N/5 cm und etwa 4000 N/5 cm aufweist.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise eingebettet ist, wobei das mindestens eine bidirektionale Gewebe mindestens ein Kettgarn und mindestens ein Schussgarn umfasst, wobei das mindestens eine Gewebe in Querrichtung und Längsrichtung eine Dehnung gemäß DIN EN ISO 13934-1 in einem Bereich zwischen etwa 2 % und etwa 100 % aufweist, bevorzugt in Querrichtung in einem Bereich zwischen etwa 10 % und etwa 24 % und in Längsrichtung in einem Bereich zwischen etwa 28 % und etwa 60 %.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise eingebettet ist, wobei das mindestens eine bidirektionale Gewebe ein Reißfestigkeitsverhältnis in Querrichtung zur Längsrichtung in einem Bereich zwischen etwa 2:1 und etwa 1:20 aufweist.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise, bevorzugt vollständig, eingebettet ist, wobei das mindestens eine bidirektionale Gewebe ein Verhältnis einer mittleren Biegesteifigkeit nach der Balkenmethode gemäß DIN 53121:2014-08 in Querrichtung zur Längsrichtung in einem Bereich zwischen etwa 1:1,3 zu 1:8 aufweist. Bevorzugt ist das Schussgarn gebildet aus Bändchen, weiter bevorzugt fibrillierten Bändchen, und das Kettgarn aus Monofilamenten. Weiter bevorzugt ist das Schussgarn gebildet aus Polypropylen und das Kettgarn aus Polyethylen oder Polyestern, insbesondere Polyethylenterephthalat. Weiter bevorzugt weist das bidirektionale Gewebe 60 bis 110 Schussfäden je 10 cm auf und 145 bis 190 Kettgarnfäden je 10 cm.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe vollständig eingebettet ist, wobei das mindestens eine bidirektionale Gewebe mindestens ein Kettgarn und mindestens ein Schussgarn umfasst und wobei das mindestens eine Kettgarn und das mindestens eine Schussgarn ein Material umfassen ausgewählt aus einer Gruppe umfassend Polypropylen, Polyethylen, Polyamide, Aramidfasern, Polyester, Naturfasern oder eine Kombination von mindestens zwei von den genannten Materialien.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe vollständig eingebettet ist, wobei das mindestens eine bidirektionale Gewebe ein Reißfestigkeitsverhältnis in Querrichtung zur Längsrichtung in einem Bereich zwischen etwa 2:1 und etwa 1:20 aufweist.

Ein weiteres beispielhaftes Korrosionsschutzband, insbesondere zur Herstellung einer Umhüllung auf Rohren oder Pipelines, umfasst mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe vollständig eingebettet ist, wobei das mindestens eine bidirektionale Gewebe ein Verhältnis einer mittleren Biegesteifigkeit nach der Balkenmethode gemäß DIN 53121:2014-08 in Querrichtung zur Längsrichtung in einem Bereich zwischen etwa 1:1,3 zu 1:8 aufweist.

In den vorstehend bevorzugten Ausführungsformen der Erfindung handelt es sich um nicht einschränkende, gleichwohl bevorzugte Beispiele. Auch eine Kombination der genannten Bereiche und Komponenten einer jeden Ausführungsform mit einer anderen oder mehreren anderen Ausführungsformen untereinander ist möglich.

Anhand der folgenden Ausführungsbeispiele wird die vorliegende Erfindung näher erläutert.

Es wurde ein erstes Korrosionsschutzband hergestellt. Eine Verbindungslage umfasste etwa 40 Gew.%, bezogen auf die Gesamtmenge der Verbindungslage, eines dritten Butylkautschuks mit einer Mooney-Viskosität ML(1+8) bei 125°C in einem Bereich von etwa 46 MU bis etwa 56 MU und einer Ungesättigtheit in einem Bereich von etwa 1,4 Mol-% bis etwa 1,8 Mol-%. Die Verbindungslage umfasste verschiedene Additive. Die Additive umfassten etwa 60 Gew.%, bezogen auf die Gesamtmenge der Verbindungslage. Ein in die Verbindungslage zumindest teilweise einzubettendes Gewebe umfasste Schussgarne aus Polypropylen und Kettgarne aus Polyethylen. Die Einbettung erfolgte über etwa 70 % der Oberfläche der Gewebe, das Gewebe lag also zu etwa 30% offen und war insoweit sichtbar. Das Schussgarn war bandförmig ausgebildet. Als Kettgarn wurde ein Monofilament eingesetzt. Das Gewebe wies eine Reißfestigkeit gemäß DIN EN ISO 13934-1 über 900 N/5cm in der Querrichtung und über 1400 N/5cm in der Längsrichtung auf. Das Verhältnis zwischen den Reißfestigkeiten in der Querrichtung zu der Längsrichtung betrug 1:1,55. Das Gewebe wies in Querrichtung und in Längsrichtung eine Dehnung gemäß DIN EN ISO 13934-1 über 15 % auf. Das Dehnungsverhältnis des Schussgarns zu Kettgarn betrug 1:1. Das Schussgarn wies eine Fadenzahl von 64 per 10 cm auf. Das Kettgarn wies ein Fadenzahl von 156 per 10 cm auf. Das Garnzahlverhältnis in Querrichtung zur Längsrichtung betrug 1:2,4. Das bidirektionale Gewebe wies eine mittlere Biegesteifigkeit gemäß der Balkenmethode gemäß DIN 53121:2014-08 von etwa 0,398 N*mm in der Querrichtung und von etwa 0,770 N*mm in der Längsrichtung auf. Das bidirektionale Gewebe wies ein Verhältnis einer mittleren Biegesteifigkeit gemäß der Balkenmethode gemäß DIN 53121:2014-08 in Querrichtung zur Längsrichtung von etwa 1:1,93 auf. Das Gewebe wurde mit der Verbindungslage in einem Kalander zusammengefügt. Das Korrosionsschutzband wurde auf Rohren mit einer Überlappung von etwa 50 % der Breite des Korrosionsschutzbandes und mit Spannung, insbesondere einer Zugkraft von mindestens etwa 20 N/cm, gewickelt Da beim Aufwickeln des Bandes auf ein Rohr Spannung aufgebracht wird, bildeten sich nur wenige oder gar keine Falten, und es wurde eine verbesserte Verbindung im Überlappungsbereich erzielt.

Es wurde ein zweites Korrosionsschutzband hergestellt. Die Verbindungslage wurde aus dem gleichen Material hergestellt wie im Fall des ersten Korrosionsschutzbandes, auch erfolgte die Herstellung in einem Kalander, allerdings bei einem höheren Druck. Als Gewebe wurde dabei ein solches mit 100 Schussfäden pro 10 cm in Form von Bändchen aus Polypropylen und mit 156 Kettfäden pro 10 cm aus Polyethylen in Form von Monofilamenten eingesetzt. Das Dehnungsverhältnis des Schussgarns zu Kettgarn betrug 1,4 : 1. Das Gewebe wurde vollständig in der Verbindungslage eingebettet. Das bidirektionale Gewebe wies eine mittlere Biegesteifigkeit gemäß der Balkenmethode gemäß DIN 53121:2014-08 von etwa 0,45 N*mm in der Querrichtung und von etwa 1,4 N*mm in der Längsrichtung auf. Das bidirektionale Gewebe wies ein Verhältnis einer mittleren Biegesteifigkeit gemäß der Balkenmethode gemäß DIN 53121:2014-08 in Querrichtung zur Längsrichtung von etwa 1:3,11 auf. Bei Wicklung auf einem Rohr entsprechend dem ersten Korrosionsschutzband konnten die Leer- oder Hohlräume im Überlappungsbereich im Vergleich zum ersten Korrosionsschutzband noch weiter vermindert werden.

**Patentansprüche**

1. Korrosionsschutzband, insbesondere zur Herstellung einer Umhüllung auf Rohren, umfassend mindestens eine Verbindungslage, hergestellt aus einem Material umfassend mindestens einen Butylkautschuk und/oder mindestens ein Polyisobutylen, wobei in der mindestens einen Verbindungslage mindestens ein bidirektionales Gewebe mindestens teilweise eingebettet ist, wobei das mindestens eine bidirektionale Gewebe ein Verhältnis einer Biegesteifigkeit nach der Balkenmethode gemäß DIN 53121:2014-08 in Querrichtung zur Längsrichtung in einem Bereich zwischen 1:1,1 und etwa 1:8 aufweist, und wobei der Begriff "etwa" einen Toleranzbereich von +/- 20% angibt.

2. Korrosionsschutzband gemäß Anspruch 1, **dadurch gekennzeichnet, dass** in der mindestens einen Verbindungslage mindestens ein bidirektionales Gewebe vollständig eingebettet ist.

3. Korrosionsschutzband gemäß Anspruch 1 oder 2, **dadurch gekennzeichnet, dass** das mindestens eine bidirektionale Gewebe mindestens ein Schussgarn und mindestens ein Kettgarn umfasst und dass das mindestens eine Schussgarn und/oder das mindestens eine Kettgarn ein Material umfassen ausgewählt aus einer Gruppe umfassend Polypropylen, Polyethylen, Polyamide, Aramidfasern, Polyester, Naturfasern oder eine Kombination von mindestens zwei von den genannten Materialien.

**4.** Korrosionsschutzband gemäß einem oder mehreren der vorhergehenden Ansprüche, **dadurch gekennzeichnet, dass** das mindestens eine Gewebe in Querrichtung und/oder in Längsrichtung des mindestens einen bidirektionalen Gewebes eine Dehnung gemäß DIN EN ISO 13934-1 in einem Bereich zwischen etwa 2 % und etwa 100 % aufweist, und wobei der Begriff "etwa" einen Toleranzbereich von +/- 20% angibt.

**5.** Korrosionsschutzband gemäß einem oder mehreren der vorhergehenden Ansprüche, **dadurch gekennzeichnet, dass** das mindestens eine bidirektionale Gewebe eine Reißfestigkeit gemäß DIN EN ISO 13934-1 in Querrichtung des mindestens einen bidirektionalen Gewebes in einem Bereich zwischen etwa 200 N/5 cm und etwa 2500 N/5 cm aufweist, und wobei der Begriff "etwa" einen Toleranzbereich von +/- 20% angibt.

**6.** Korrosionsschutzband gemäß einem oder mehreren der vorhergehenden Ansprüche, **dadurch gekennzeichnet, dass** das mindestens eine bidirektionale Gewebe eine Reißfestigkeit gemäß DIN EN ISO 13934-1 in Längsrichtung des mindestens einen bidirektionalen Gewebes in einem Bereich zwischen etwa 400 N/5 cm und etwa 4000 N/5 cm aufweist, und wobei der Begriff "etwa" einen Toleranzbereich von +/- 20% angibt.

**7.** Korrosionsschutzband gemäß einem oder mehreren der vorhergehenden Ansprüche, **dadurch gekennzeichnet, dass** das mindestens eine bidirektionale Gewebe ein Reißfestigkeitsverhältnis in Querrichtung zur Längsrichtung in einem Bereich zwischen etwa 2:1 und etwa 1:20 aufweist, und wobei der Begriff "etwa" einen Toleranzbereich von +/-20% angibt.

**8.** Korrosionsschutzband gemäß einem oder mehreren der vorhergehenden Ansprüche, **dadurch gekennzeichnet, dass** das mindestens eine bidirektionale Gewebe eine Biegesteifigkeit nach der Balkenmethode gemäß DIN 53121:2014-08 in Längsrichtung des mindestens einen bidirektionalen Gewebes in einem Bereich zwischen etwa 0,2 N*mm und etwa 1,5 N*mm aufweist, und wobei der Begriff "etwa" einen Toleranzbereich von +/- 20% angibt.

**9.** Korrosionsschutzband gemäß einem oder mehreren der vorhergehenden Ansprüche, **dadurch gekennzeichnet, dass** das mindestens eine bidirektionale Gewebe eine Biegesteifigkeit nach der Balkenmethode gemäß DIN 53121:2014-08 in Querrichtung des mindestens einen bidirektionalen Gewebes in einem Bereich zwischen etwa 0,1 N*mm und etwa 0,8 N*mm aufweist, und wobei der Begriff "etwa" einen Toleranzbereich von +/- 20% angibt.

**10.** Korrosionsschutzband gemäß einem oder mehreren der vorhergehenden Ansprüche, **dadurch gekennzeichnet, dass** das mindestens eine bidirektionale Gewebe ein Dicke in einem Bereich zwischen etwa 0,2 mm und etwa 2 mm, aufweist, und wobei der Begriff "etwa" einen Toleranzbereich von +/- 20% angibt.

**11.** Verfahren zur Herstellung eines Korrosionsschutzbandes gemäß einem oder mehreren der vorhergehenden Ansprüche, wobei mindestens ein Gewebe mit mindestens einer Verbindungslage zusammengefügt wird, wobei das mindestens eine bidirektionale Gewebe ein Verhältnis einer Biegesteifigkeit nach der Balkenmethode gemäß DIN 53121:2014-08 in Querrichtung zur Längsrichtung in einem Bereich zwischen 1:1,1 und etwa 1:8 aufweist, und wobei der Begriff "etwa" einen Toleranzbereich von +/- 20% angibt.

**12.** Verwendung eines Korrosionsschutzbandes gemäß einem oder mehreren der Ansprüche 1 bis 10 zum Schutz von Rohren und Rohre umfassenden Anlagen, Tanks und Bestandteilen von Tanks.

**13.** Verfahren zur Erzeugung eines Korrosionsschutzes auf Rohren und Rohre umfassenden Anlagen, Tanks und Bestandteilen von Tanks mit einem mindestens zweilagigem Korrosionsschutzband gemäß einem oder mehreren der Ansprüche 1 bis 10.

**14.** Rohr, Tank oder Bestandteil von einem Tank mit einem Korrosionsschutzband gemäß einem oder mehreren der Ansprüche 1 bis 10.

**15.** Verwendung eines bidirektionalen Gewebes wie in den Ansprüchen 1 bis 10 definiert in einem Korrosionsschutzband gemäß einem der Ansprüche 1 bis 10.

**Claims**

**1.** An anti-corrosion tape, in particular for producing a pipe covering, comprising at least one bonding ply, produced from a material comprising at least one butyl rubber and/or at least one polyisobutylene, wherein at least one bidirectional woven fabric is at least partially embedded in the at least one bonding ply, whereby the at least one bidirectional woven fabric has a ratio of a bending stiffness according to the beam method according to DIN 53121:2014-08 in the transverse direction to the longitudinal direction in a range between 1:1.1 and about 1:8, and wherein the term "about" indicates a tolerance range of +/- 20%.

**2.** The anti-corrosion tape according to claim 1, **char-**

**acterised in that** at least one bidirectional woven fabric is fully embedded in the at least one bonding ply.

3. The anti-corrosion tape according to claim 1 or 2, **characterised in that** the at least one bidirectional woven fabric comprises at least one weft yarn and at least one warp yarn, and **in that** the at least one weft yarn and/or the at least one warp yarn comprise a material selected from a group comprising polypropylene, polyethylene, polyamides, aramid fibres, polyester, natural fibres or a combination of at least two of said materials.

4. The anti-corrosion tape according to any one or more of the preceding claims, **characterised in that** the at least one woven fabric has an elongation according to DIN EN ISO 13934-1 in a range between about 2% and about 100% in the transverse direction and in the longitudinal direction of the at least one bidirectional woven fabric, and wherein the term "about" indicates a tolerance range of +/- 20%.

5. The anti-corrosion tape according to any one or more of the preceding claims, **characterised in that** the at least one bidirectional woven fabric has a tensile strength according to DIN EN ISO 13934-1 in a range between about 200 N/5 cm and about 2500 N/5 cm in the transverse direction of the at least one bidirectional woven fabric, and wherein the term "about" indicates a tolerance range of +/- 20%.

6. The anti-corrosion tape according to any one or more of the preceding claims, **characterised in that** the at least one bidirectional woven fabric has a tensile strength according to DIN EN ISO 13934-1 in a range between about 400 N/5 cm and about 4000 N/5 cm in the longitudinal direction of the at least one bidirectional woven fabric, and wherein the term "about" indicates a tolerance range of +/- 20%.

7. The anti-corrosion tape according to any one or more of the preceding claims, **characterised in that** the at least one bidirectional woven fabric has a tensile strength ratio in the transverse direction to the longitudinal direction in a range between about 2:1 and about 1:20, and wherein the term "about" indicates a tolerance range of +/- 20%.

8. The anti-corrosion tape according to any one or more of the preceding claims, **characterised in that** the at least one bidirectional woven fabric has a bending stiffness according to the beam method according to DIN 53121:2014-08 in a longitudinal direction of the at least one bidirectional woven fabric in a range between about 0.2 N*mm and about 1.5 N*mm, and wherein the term "about" indicates a tolerance range of +/-20%.

9. The anti-corrosion tape according to any one or more of the preceding claims, **characterised in that** the at least one bidirectional woven fabric has a bending stiffness according to the beam method according to DIN 53121:2014-08 in a transverse direction of the at least one bidirectional woven fabric in a range between about 0.1 N*mm and about 0.8 N*mm, and wherein the term "about" indicates a tolerance range of +/-20%.

10. The anti-corrosion tape according to any one or more of the preceding claims, **characterised in that** the at least one bidirectional woven fabric has a thickness in a range between about 0.2 mm and about 2 mm, and wherein the term "about" indicates a tolerance range of +/- 20%.

11. A method for producing an anti-corrosion tape according to any one of more of the preceding claims, wherein at least one woven fabric is joined together with at least one bonding ply, whereby the at least one bidirectional woven fabric has a ratio of a bending stiffness according to the beam method according to DIN 53121:2014-08 in the transverse direction to the longitudinal direction in a range between 1:1.1 and about 1:8, and wherein the term "about" indicates a tolerance range of +/- 20%.

12. Use of an anti-corrosion tape according to any one or more of claims 1 to 10 for protecting pipes and systems comprising pipes, tanks and constituent parts of tanks.

13. A method for achieving corrosion protection on pipes and systems comprising pipes, tanks and constituent parts of tanks with an at least two-layer anti-corrosion tape according to any one or more of claims 1 to 10.

14. A pipe, tank or constituent part of a tank with an anti-corrosion tape according to any one or more of claims 1 to 10.

15. Use of a bidirectional woven fabric as defined in claims 1 to 10 in an anti-corrosion tape according to any one of claims 1 to 10.

**Revendications**

1. Bande de protection contre la corrosion, en particulier destinée à la réalisation d'une enveloppe sur des tuyaux, comprenant au moins une couche de liaison, fabriquée à partir d'un matériau comprenant au moins un caoutchouc butyle et/ou au moins un polyisobutylène, dans laquelle au moins un tissu bidirectionnel est au moins partiellement intégré dans ladite au moins une couche de liaison, ledit au moins un tissu bidirectionnel présentant un rapport de rigidité à la flexion selon la méthode de la poutre conformément à la norme DIN 53121:2014-08 entre le sens transversal et le sens longitudinal compris entre 1:1,1 et environ 1:8, le terme « environ » indiquant une plage de tolérance de +/- 20 %.

2. Bande de protection contre la corrosion selon la revendication 1, **caractérisée en ce qu'**au moins un tissu bidirectionnel est entièrement intégré dans la au moins une couche de liaison.

3. Bande de protection contre la corrosion selon la revendication 1 ou 2, **caractérisée en ce que** ledit au moins un tissu bidirectionnel comprend au moins un fil de trame et au moins un fil de chaîne, et **en ce que** ledit au moins un fil de trame et/ou ledit au moins un fil de chaîne comprennent un matériau choisi parmi un groupe comprenant le polypropylène, le polyéthylène, les polyamides, les fibres d'aramide, le polyester, les fibres naturelles ou une combinaison d'au moins deux des matériaux mentionnés.

4. Bande de protection contre la corrosion selon une ou plusieurs des revendications précédentes, **caractérisée en ce que** ledit au moins un tissu présente, dans le sens transversal et/ou dans le sens longitudinal dudit au moins un tissu bidirectionnel, un allongement selon la norme DIN EN ISO 13934-1 compris entre environ 2 % et environ 100 %, le terme « environ » indiquant une plage de tolérance de +/- 20 %.

5. Bande de protection anticorrosion selon une ou plusieurs des revendications précédentes, **caractérisée en ce que** ledit au moins un tissu bidirectionnel présente une résistance à la rupture selon la norme DIN EN ISO 13934-1 dans le sens transversal dudit au moins un tissu bidirectionnel comprise entre environ 200 N/5 cm et environ 2500 N/5 cm, le terme « environ » indiquant une plage de tolérance de +/- 20 %.

6. Bande de protection anticorrosion selon une ou plusieurs des revendications précédentes, **caractérisée en ce que** ledit au moins un tissu bidirectionnel présente une résistance à la rupture selon la norme DIN EN ISO 13934-1 dans le sens longitudinal dudit au moins un tissu bidirectionnel, comprise entre environ 400 N/5 cm et environ 4000 N/5 cm, le terme « environ » indiquant une plage de tolérance de +/- 20 %.

7. Bande de protection contre la corrosion selon une ou plusieurs des revendications précédentes, **caractérisée en ce que** ledit au moins un tissu bidirectionnel présente un rapport de résistance à la rupture dans le sens transversal par rapport au sens longitudinal compris entre environ 2:1 et environ 1:20, le terme « environ » indiquant une plage de tolérance de +/- 20 %.

8. Bande de protection contre la corrosion selon une ou plusieurs des revendications précédentes, **caractérisée en ce que** ledit au moins un tissu bidirectionnel présente une rigidité à la flexion selon la méthode de la poutre conformément à la norme DIN 53121:2014-08 dans le sens longitudinal dudit au moins un tissu bidirectionnel dans une plage comprise entre environ 0,2 N*mm et environ 1,5 N*mm, le terme « environ » indiquant une plage de tolérance de +/-20 %.

9. Bande anticorrosion selon une ou plusieurs des revendications précédentes, **caractérisée en ce que** ledit au moins un tissu bidirectionnel présente une rigidité à la flexion selon la méthode de la poutre conformément à la norme DIN 53121: 2014-08, dans le sens transversal dudit au moins un tissu bidirectionnel, comprise entre environ 0,1 N*mm et environ 0,8 N*mm, le terme « environ » indiquant une plage de tolérance de +/- 20 %.

10. Bande de protection contre la corrosion selon une ou plusieurs des revendications précédentes, **caractérisée en ce que** ledit au moins un tissu bidirectionnel présente une épaisseur comprise entre environ 0,2 mm et environ 2 mm, le terme « environ » indiquant une plage de tolérance de +/- 20 %.

11. Procédé de fabrication d'une bande anticorrosion selon une ou plusieurs des revendications précédentes, dans lequel au moins un tissu est assemblé avec au moins une couche de liaison, le au moins un tissu bidirectionnel présentant un rapport de rigidité à la flexion selon la méthode de la poutre conformément à la norme DIN 53121:2014-08, dans le sens transversal par rapport au sens longitudinal, compris entre 1:1,1 et environ 1:8, le terme « environ » indiquant une plage de tolérance de +/- 20 %.

12. Utilisation d'une bande anticorrosion selon une ou plusieurs des revendications 1 à 10 pour la protection de tuyaux et d'installations comprenant des tuyaux, des réservoirs et des composants de réservoirs.

13. Procédé pour réaliser une protection anticorrosion sur des tuyaux et des installations comprenant des tuyaux, des réservoirs et des composants de réservoirs à l'aide d'une bande de protection anticorrosion à au moins deux couches selon une ou plusieurs des revendications 1 à 10.

14. Tuyau, réservoir ou composant d'un réservoir muni d'une bande de protection anticorrosion selon une ou plusieurs des revendications 1 à 10.

15. Utilisation d'un tissu bidirectionnel tel que défini dans les revendications 1 à 10 dans une bande de protection anticorrosion selon l'une des revendications 1 à 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2022214005 A1
- RO 118806 B1
- DE 2032007 A1
- US 2011079311 A1
- DE 102018107257 B3
- WO 2014157522 A1